## Europäisches Patentamt

(19) **European Patent Office**

**Office européen des brevets**

(11) Publication number: **0 173 484**
**B1**

## EUROPEAN PATENT SPECIFICATION

(45) Date of publication of patent specification: **28.11.90**

(51) Int. Cl.⁵: **B 01 D 59/30**

(21) Application number: **85305571.3**

(22) Date of filing: **05.08.85**

(54) Process for the separation of gadelinium isotopes.

(30) Priority: **06.08.84 US 638331**

(43) Date of publication of application:
**05.03.86 Bulletin 86/10**

(45) Publication of the grant of the patent:
**28.11.90 Bulletin 90/48**

(84) Designated Contracting States:
**BE DE FR GB IT SE**

(56) References cited:

**PATENT ABSTRACTS OF JAPAN, vol. 7, no. 108
(C-165)1253r, 11th May 1983; & JP - A - 58 32022
(NEMOTO TOKUSHIYU KAGAKU K.K.) 24-02-
1983**

(73) Proprietor: **WESTINGHOUSE ELECTRIC
CORPORATION
Westinghouse Building Gateway Center
Pittsburgh Pennsylvania 15235 (US)**

(72) Inventor: **Peterson, Steven Harold
4970 Northlawn Drive
Murrysville Pennsylvania (US)**
Inventor: **Lahoda, Edward Jean
404 Morris Street
Pittsburgh Pennsylvania (US)**
Inventor: **Weisberg, Sharon Lando
1306 S. Negley Avenue
Pittsburgh Pennsylvania (US)**

(74) Representative: **van Berlyn, Ronald Gilbert
23, Centre Heights
London, NW3 6JG (GB)**

Courier Press, Leamington Spa, England.

**Description**

This invention relates to a process for the separation of gadolinium isotopes from mixtures containing the same. The process may be used to separate specifically desired gadolinium isotopes from a mixture with other gadolinium isotopes or from a mixture of other gadolinium isotopes and other rare earth elements.

Nuclear reactor operation can be described in terms of "neutron economy". In simple terms, fission of a fuel nucleus releases one or more neutrons, and one neutron is required to sustain the chain reaction. Many of the design features of a nuclear reactor are based upon their impact on the neutron economy. In particular, materials for use in reactors are selected for their neutron capture cross-section $\sigma$, along with other properties. Low $\sigma$ materials are selected for most reactor components, such as support structure, fuel rod cladding, moderators, and the like. High $\sigma$ materials are selected for particular uses such as control rods and burnable poison shims. A burnable poison shim is a high $\sigma$ material added in carefully selected quantities to decrease neutron flux early in a fuel cycle, and to become transparent or neutral after neutron absorption so that late in a fuel cycle more of the fission neutrons are absorbed by fuel.

The element with the highest $\sigma$ for the natural isotope mixture is gadolinium. However, its use is limited because as the gadolinium concentration increases, the fuel thermal conductivity and melting temperature decrease. Additionally, production of high weight percent (about 8 weight percent) gadolinium fuel is judged to be more difficult than low weight percent (less than about 4 weight percent). Only two isotopes have high absorbance, as illustrated in the following table:

Properties of naturally occurring gadolinium isotopes

| Isotope Mass | Natural Abundance | $\sigma$ (Thermal) Barns |
|---|---|---|
| 152 | 0.20% | 125 |
| 154 | 2.15 | 102 |
| 155 | 14.73 | 61,000 |
| 156 | 20.47 | 1,000 |
| 157 | 15.68 | 254,000 |
| 158 | 24.87 | 3.5 |
| 160 | 21.90 | 0.77 |

As illustrated, $Gd^{155}$ and $Gd^{157}$ have the highest $\sigma$ of the gadolinium isotopes but make up only about 30 percent of the natural gadolinium. The cost to benefit ratio of the use of gadolinium as a burnable poison shim can be decreased by using an isotope enrichment process to increase the abundance of the high $\sigma$ isotopes, while at the same time decreasing the negative affects.

Various processes have been proposed for the separation or enrichment of isotopes, such as those using photochemical reactions, laser techniques and ion exchange separation. A number of isotope separation processes have been based on chemical exchange, as described in Isotope Separation, S. Villani, American Nuclear Society, 1976. One method is ion exchange chromatography, in which a solution containing the element of interest, in ionic form, is passed through a column of ion exchange resins. Exchange of ions is between resin-bound and solution phase forms. As a general rule, ions containing a heavy isotope are concentrated in the heavier component, which is the resin in the case of ion exchange.

Commercial purification of rare earth elements was originally based on ion exchange separations. Of particular interest is a pair of publications by F. Molnar, A. Horvath and V. A. Khalin in the Journal of Chromatography, Vol 26 (1976), the first entitled "Anion Exchange Behavior of Light Rare Earths in Aqueous Methanol Solutions Containing Neutral Nitrates, I. Separation of Carrier-Free Light Rare Earths" (pp. 215—224); and "Anion Exchange Behavior of Light Rare Earths in Aqueous Methanol Solutions Containing Neutral Nitrates, II. Macro-Micro Separations" (pp. 225—231). These publications report on separation of rare earth elements, and particularly on separation of gadolinium from its neighboring elements on the periodic table europium and terbium. The chromatographic peaks shown therein have abnormal shapes, and suggest, to the present inventors, that the peak shape is being influenced by a small degree of isotope separation, although the authors did not make such an interpretation.

According to the present invention the process for separation of gadolinium isotopes selected from the group consisting of $Gd^{155}$, $Gd^{156}$ or $Gd^{157}$, alone or mixed with each other, from a mixture of gadolinium isotopes containing the same, comprises the steps of:

passing a solution containing said mixture of gadolinium isotopes and an eluant solution through a plurality of columns containing ion exchange resin;

as said solution containing said gadolinium isotopes exits the last of said plurality of columns, separating a band of solution enriched in said gadolinium isotope selected from the group consisting of $Gd^{155}$, $Gd^{156}$ or $Gd^{157}$, alone or mixed with each other, from bands enriched in the other naturally occurring gadolinium isotopes.

For an anion exchange resin, an eluant solution is provided that contains ammonium nitrate, in a concentration of between 1—2 N, in aqueous methanol, the aqueous methanol containing 70—85 percent by volume methanol. A plurality of columns, preferably 5—30 columns, and more preferably 20—30 columns, containing a basic anion exchange resin is saturated with the eluant solution and a feed solution comprising eluant solution and the mixture of gadolinium isotopes is charged to the first of the plurality of saturated columns. Additional eluant solution is passed through the saturated columns containing the feed solution, and a fraction of eluant solution rich in the desired gadolinium isotopes formed, which fraction is separated from the remainder of the eluant solution after passage through the columns. Aqueous methanol and ammonium nitrate are recovered from the eluant and the aqueous methanol recycled to form further eluant solution.

From the cation ion exchange resin, an eluant solution containing EDTA is provided. A plurality of columns containing a strong acid ion exchange resin is saturated with the eluant solution, and a feed solution comprising eluant solution and the mixture of gadolinium isotopes is charged to the first of the plurality of saturated columns. Additional eluant solution is passed through the saturated columns containing the feed solution, and a fraction of the eluant solution rich in the desired gadolinium isotopes formed, which fraction is separated from the remainder of the solution after passage through the columns. Aqueous EDTA is recovered from the eluant and the aqueous EDTA recycled to form further eluant solution.

In order to make the invention clearly understood reference will now be made to the accompanying drawings, in which:

Figure 1 is a flow chart schematically illustrating an embodiment of a process of the present invention for separation of gadolinium isotopes; and

Figure 2 is a flow chart schematically illustrating a second embodiment of the process in accordance with the present invention.

The present process effects the efficient and economical separation of desired gadolinium isotopes from mixtures containing the same. Of particular interest is the separation of a mixture of $Gd^{155}$, $Gd^{156}$ and $Gd^{157}$, or any one or more of those isotopes.

The mixture that is treated according to the present invention can comprise a mixture of gadolinium isotopes that has previously been separated from other rare earth metals, or a mixture containing gadolinium isotopes and other rare earth metals such as sumarium (Sm), europium (Eu), terbium (Tb) and dysprosium (Dy). The starting material used in the process can comprise the oxides or metals of these elements that are converted to nitrate in solution, such as by dissolving the same in nitric acid, or a nitrate solution of the elements, or other strong mineral acid, such as hydrochloric or sulfuric acid.

The separation is preferably effected using an eluant solution and a saturated anionic or cationic exchange resin.

For the embodiment using an anion resin, an eluant solution is prepared which consists essentially of aqueous methanol and which contains ammonium nitrate. The solution contains aqueous methanol, with a methanol content of between 70—85 percent by volume. If less than 70 volume percent methanol is used, the separation of the isotopes is reduced and an efficient and economical separation is not achieved, while if greater than 85 volume percent methanol is used, the gadolinium compounds will tend to precipitate from the solution and separation prevented. Preferably, the aqueous methanol will contain about 80 percent methanol.

The aqueous methanol contains ammonium nitrate in an amount sufficient to provide a 1.0—2.0 normal solution (1.0—2.0N), i.e. between one and two gram moles weight of ammonium nitrate per liter of solution. The normality, as described, should be from 1.0—2.0. If a normality of less than 1.0 is used, the elution time required is extended and the amount of eluant needed increased to a value that is not efficient. If a normality of more than 2.0 is used, the elution rate is so strong as to prevent adequate separation of the isotopes. This normality is important relative to the eluant solution, as well as to the feed solution hereinafter described. In the preferred mode, the ammonium nitrate is present in the solution in a concentration of about 1.5 N. This eluant solution is used initially to saturate a plurality of columns of an anion exchange resin.

A plurality of columns of an anion exchange resin are required in order to effect an efficient and economical separation of the gadolinium isotopes. The number and length of these columns may vary dependent upon the system desired. For example, a system comprised of about 180—120 columns of resin, each having a length of about three meters, could be used although use of a fewer number of columns is preferred. A system which contains between 20—30 columns of anion exchange resin is preferred, where each column of resin has a length of about thirteen meters.

The diameter of the columns is a matter of choice, and is selected based on the production rate desired.

The anion exchange resin used is a strongly basic anion exchange resin having quaternary amine groups, generally prepared by the chloromethylation of a styrene-divinylbenzene copolymers followed by aminating of the same. An example of a suitable such quaternary ammonium basic anion exchange resin is Amberlite IRA-400 made by Rohm & Haas Co. The anion exchange resin should be of a particle size of from 37 μm to 74 μm (200—400 mesh, U.S. Standard sieve) in diameter.

In the process of the afore-mentioned especially convenient embodiment, the columns of anion exchange resin are saturated with the eluant solution. A feed solution of the gadolinium isotope mixture, prepared by dissolving the gadolinium isotope compounds in further eluant solution, is then charged to the first saturated column, the feed solution containing a nitrate solution of the gadolinium isotopes and ammonium nitrate, the nitrate concentration being of a a concentration of between 1—2 N, preferably 1.5N. As above-described, the nitrates are preferably formed by dissolving the gadolinium mixture in nitric acid, and the feed solution adjusted to the desired concentration of nitrates by addition of ammonium nitrate. Other strong mineral acids such as hydrochloric and sulfuric acid may be substituted for nitric acid.

The amount of feed solution that is charged to the saturated columns of anionic resin will vary dependent upon the diameter of the column. The amount should be that sufficient to provide a band of isotopes that is narrow relative to the length of the column. Preferably, the feed solution should be in an amount that will produce a band that is of a length equal to about 0.1 percent of the length of the column. After the feed solution has been deposited on the saturated anion exchange resin, additional eluant solution is passed through the columns and forms a fraction of eluant solution rich in the desired gadolinium isotopes and a remainder of eluant solution containing the other gadolinium isotopes, and other rare earth elements, when present.

The additional eluant solution is charged to the columns at a flow rate of 0.155 ml/cm$^2$ (1 ml/in$^2$) of resin column/min. The flow rate again may vary dependent upon other conditions followed, but the flow rate should be from 0.0775—0.31 ml/cm$^2$ (0.5—2.0 ml/in$^2$) of resin column/min, with a flow rate of about 0.155 ml/cm$^2$ (1 ml/in$^2$) of resin column/min being preferred. The eluant solution should be maintained at a temperature of from 40—70°C, preferably at 50°C, upon charging to the columns and during passage therethrough. With flow of the additional eluant solution through the columns, the isotopes are sequentially stripped from the anion exchange resin and form the fraction of desired isotopes as a downwardly moving band of eluant solution containing the same. The desired fraction, when it reaches the bottom of the column may be readily collected and separated from the remainder of the eluant solution.

In another embodiment of the present invention, more than one band or ring of isotope mixture, or feed solution, may be present in the column at a particular time. In this embodiment, after the columns have been saturated with eluant solution, a first charge of feed solution is fed to the columns and additional eluant solution passed through the columns causing the band or ring of isotopes to progress downwardly. After this initial band has moved a sufficient distance from the top of the columns, but while not completely discharged therefrom, a further charge of feed solution may be made to the columns to form a further band or ring. Flow of additional eluant solution therethrough will move both bands, while effecting formation of the desired fractions of isotopes, which fractions are then separated after passage through the columns.

The fraction of eluant solution containing the desired isotopes, or product, and the remainder of the eluant solution, or tails, may be collected in separate storage tanks and separately treated. The product and tails may both be processed in a similar manner. The metal nitrates are precipitated by adding ammonium thereto to form a hydroxide precipitate, and the precipitate removed, such as by filtering on a rotary drum filter. The hydroxide precipitate is then removed from the filter and calcined in a kiln to produce the product in oxide form. Ths eluant, separated as the filtrate in the rotary filter, is treated and aqueous methanol recycled to the system. The filtrate is adjusted in pH to a value of about 7.0, and the aqueous methanol recycled for formation of further eluant solution. A portion of the eluant, about 5 percent, is removed as a bleed stream to keep residual impurities from building up in the system. The bleed stream is concentrated to about 99+ percent, such as in a vacuum column, with the aqueous methanol recycled, while the residue is concentrated to give ammonium nitrate which may be used as a by-product from the separation process.

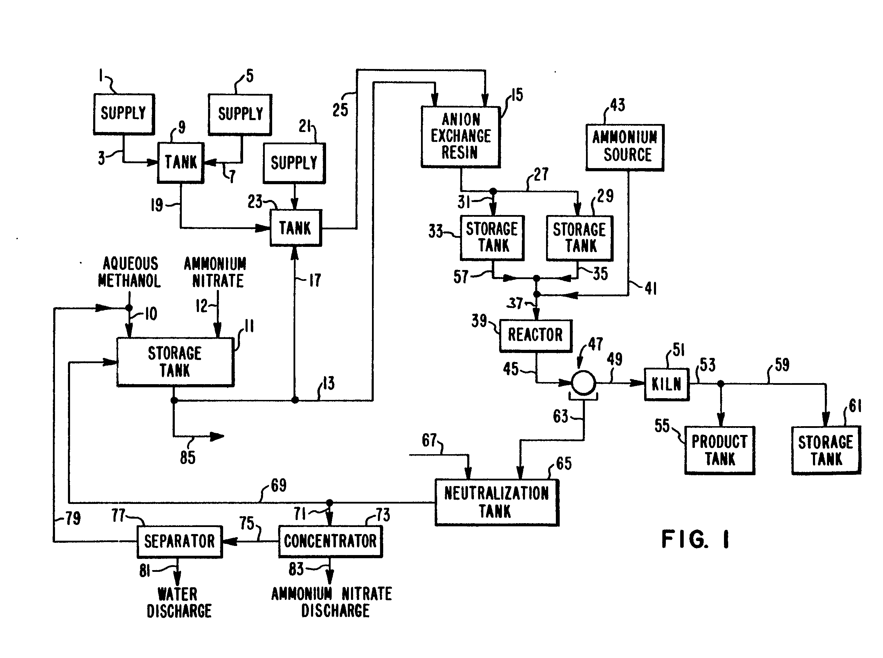

Fig. 1 of the drawings schematically illustrates one process of the afore-mentioned especially convenient embodiment in which a supply 1 of gadolinium isotope mixture which may comprise a mixture of gadolinium isotopes or a mixture of gadolinium isotopes and other rare earth metals is passed through line 3, and a supply 5 of nitric acid is passed through line 7 and the two are combined and metal nitrates formed in tank 9. A supply of eluant solution 11 is provided, which is comprised of aqueous methanol (80 percent by volume) from line 10 which eluant solution contains ammonium nitrate from line 12 in a concentration to give a 1.5 N eluant solution. Eluant solution is passed through line 13 to a plurality of columns of basic anion exchange resin 15, and the resin saturated with the eluant solution.

With the columns of basic anion exchange resin 15 saturated, a feed solution is formed by mixing further eluant solution from line 17 with gadolinium nitrates from line 19, and ammonium nitrate from a supply 21. The feed solution formed in tank 23 is charged through line 25 to the plurality of basic anion resin columns 15.

After the feed solution has been charged to the plurality of columns, additional eluant solution from line 13 is passed through the plurality of columns containing the feed solution and a fraction of eluant solution is formed that is rich in the desired isotopes of gadolinium. This fraction is separated and discharged through line 27 to a product storage tank 29. The remainder of the eluant solution which contains other gadolinium isotopes and other rare earth elements, where present, is discharged through line 27 to a branch line 31 and then to a separate tails storage tank 33.

The product gadolinium isotopes and other components of the mixture may be processed in batch operations at different times. The desired gadolinium isotopes, in nitrate form, are discharged through line 35 to a feed line 37 of a reactor 39. Ammonium is also charged to the reactor 39 through line 41, from a source 43 thereof. In the reactor 39, precipitation of the gadolinium isotopes as a hydroxide is effected. The precipitate and eluant are discharged from reactor 39 through line 45 to a filter 47, such as a rotary drum filter. The precipitate is passed through line 49 to a kiln 51 and the precipitate treated to form gadolinium oxide. The gadolinium oxide formed in kiln 51 is discharged through line 53 to a product supply tank 55. In processing of the other isotopes and rare earths, the same sequence may be used, with the tails from tank 33 passed through line 57 to feed line 37, to reactor 39 for formation of precipitate, and the eluant and precipitate passed through line 45 to filter 47. The precipitate is then passed through line 49 to kiln 51, and the oxides so formed discharged through line 53 to branch line 59 and storage tank 61.

In order to recycle the aqueous methanol, the filtrate from filter 47 is fed through line 63 to a storage and neutralization tank 65. Nitric acid is charged to the tank 65 through line 67 to neutralize the ammonium hydroxide present. Aqueous methanol is removed from tank 65 and returned by means of recycle line 69 to form further eluant solution 11. A portion of the solution from line 69 is discharged through line 71 and is concentrated in a concentrator 73, such as a vacuum column. The aqueous methanol from concentrator 73 is passed through line 75 to a separator 77 to recover methanol that is returned through line 79 to form further eluant solution 11. Water separated in separator 77 is discharged through line 81. The concentrated ammonium nitrate formed in concentration 73 is discharged through line 83.

A bleed stream is removed from the system, about 5 percent of the eluant solution formed during continuous operation of the system with recycling effected, through a line 85 so as to prevent buildup of impurities in the continuously operating system.

In the embodiment of the present invention using cation resins, the eluant used is selected from ethylene-diaminetetra acetic acid (EDTA), acetonylacetone (AcAc) or benzoylacetone (BzAc), with EDTA being preferred. To improve production, it is contemplated that the resin may be preloaded with copper sulfate. In our preferred embodiment, the eluant contains 0.5 to 1.0 w/o EDTA at a pH of between 7 and 9. A more preferred concentration is about 1.0 w/o at a pH of 8.2 to 8.7.

The cation resin has a size in the range of 50—100 mesh, U.S. standard sieve. Preferably the cation resin is a strong acid styrene gel type and is used in a train of 50 to 60 thirteen meter long columns. IRC-120 is an example of such a resin and is manufactured by Rohm & Haas Co.

The flow rate through the columns is about 0.5 to 2 ml/minute/cm$^2$, with about 1 ml/minute/cm$^2$ preferred, while the loading of gadolinium is between 0.5 and 2 g/cm$^2$, with 1 g/cm$^2$ preferred. The gadolinium feed is dissolved in any strong mineral acid, with nitric acid preferred.

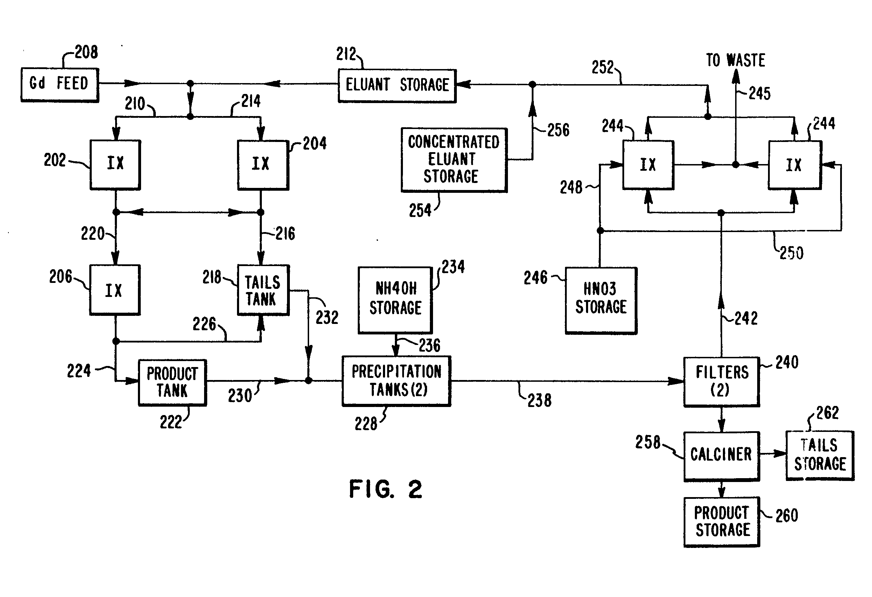

Figure 2 presents an overall flow sheet for an embodiment of gadolinium isotope separation utilizing cation ion exchange. The process utilizes two 167.6 m (550 foot) long trains of strong acid ion exchange resin (e.g. IRC-120) to separate the isotopes of gadolinium. The first 167.6 m (550 foot) long train utilizes parallel sets of columns 202 and 204, 12.2 m (40 feet) in height. The second train utilizes a single set of columns 206, 12.2 m (40 feet) in height. The operation is as follows.

Concentrated gadolinium nitrate feed from storage tank 208 is injected via line 210 into column set 202. Eluant from storage tank 212 is then pumped via line 210 into colun set 202 at a predetermined rate. After about 1000 minutes, gadolinium nitrate from storage tank 208 is injected into column set 204 via 214 followed by eluant from storage tank 212.

As wave fronts emerge from column set 202, the fractions that contain gadolinium isotopes 152, 154 158 and 160 are discarded via line 216 into tails tanks 218. The fractions that contain gadolinium isotopes 155, 156 and 157 are sent to the second train of ion exchange columns 206 via line 220. This same procedure is repeated as wave fronts emerge from column set 204. This method of operation reduces the number of ion exchange columns required by 25%.

As the wave fronts emerge from the second train of ion exchange columns 206, the fractions which contain gadolinium isotopes 155 and 157 are sent to product tank 222 via line 224, while the fraction containing gadolinium isotope 156 is sent to tails tanks 218 via line 226.

The contents of the product 222 and tails 218 tank are batched through precipitation tanks 228 via lines 230 and 232, respectively. The precipitation tanks 228 include at least two tanks so that one tank always handles the tails while the other tanks is devoted solely to processing the product. In the precipitation tanks 228 ammonium hydroxide from storage tank 234 is added via line 236 to precipitate the gadolinium as the hydroxide. The mixture formed is then sent via line 238 to filter presses 240 (one press for Gd 155 and 157 and one press for Gd 152, 154, 156, 158 and 160) where the gadolinium hydroxide precipitates are removed. The filtrate containing ammonium hydroxide and EDTA is discharged via line 242 to weak acid ion exchange resin columns 244 where it is treated to remove ammonium ions. Nitric acid is added from storage tank 246 via lines 248 and 250 to regenerate the weak acid ion exchange resin. Ammonium nitrate is dicharged via line 245 a waste. The resulting recycled filtrate (an aqueous solution of EDTA) is then sent via line 252 to the eluant storage tank. The concentration of the EDTA in the recycled eluant is checked and EDTA is added as needed from EDTA concentrate storage tank 254 via line 256.

The filter cakes of gadolinium hydroxide produced by filters 240 are then sent to electric calciner 258 where they are calcined to gadolinia and then to product 260 or tails 262 storage as appropriate.

The preceding examples have described the present invention utilizing processes producing a product enriched in Gd 155, 156 and 157, or enriched in Gd 155 and 157. It should be understood that product enriched in only Gd 155 or Gd 157 are also contemplated. Preferably the product produced by this invention contains at least about 80% by weight, and more preferably at least about 90% by weight, of the desired gadolinium isotope or isotopes.

It is further contemplated that a weak acid resin (such as IRC-84 manufactured by Rohm & Haas) may be substituted for the strong acid resins described above. It is also contemplated that a high pressure liquid chromatographic system may also be used to practice the present invention. In this case a silica based resin such as Partisil 10 SCX may be used.

## Claims

1. The process for separation of gadolinium isotopes selected from the group consisting of $Gd^{155}$, $Gd^{156}$ or $Gd^{157}$, alone or mixed with each other, from a mixture of gadolinium isotopes containing the same, said process comprising the steps of:

passing a solution containing said mixture of gadolinium isotopes and an eluant solution through a plurality of columns containing ion exchange resin;

as said solution containing said gadolinium isotopes exits the last of said plurality of columns, separating a band of solution enriched in said gadolinium isotope selected from the group consisting of $Gd^{155}$, $Gd^{156}$ or $Gd^{157}$. alone or mixed with each other, from bands enriched in the other naturally occurring gadolinium isotopes.

2. The process according to claim 1 wherein said ion exchange resins are selected from the group consisting of anion and cationic exchange resins.

3. The process according to claim 1 further comprising the step of forming gadolinium from said band of solution enriched with said gadolinium isotope.

4. The process according to claim 2 wherein said cation exchange resins consist essentially of a strong acid resin.

5. The process according to claim 1 wherein said ion exchange resin consists essentially of a cation exchange resin; wherein said eluant solution contains an organic compound selected from the group consisting of EDTA, AcAc and BzAc.

6. The process according to claim 5 wherein said organic compound is EDTA.

7. The process for separation of gadolinium isotopes as defined in Claim 1 comprising the steps of:

providing an eluant solution consisting essentially of aqueous methanol, containing 70—85 percent by volume methanol, and having a concentration of ammonium nitrate of a value of 1.0—2.0 N;

saturating a plurality of columns of a basic anion exchange resin with said eluant solution;

forming a gadolinium saturated feed solution;

charging said feed solution to said plurality of saturated columns;

passing additional said eluant solution through said plurality of columns containing the feed solution so as to form a fraction of eluant solution rich in said gadolinium isotopes $Gd^{155}$, $Gd^{156}$ and $Gd^{157}$;

separating said fraction from the remainder of said eluant solution after passage through said columns;

recovering the aqueous methanol and ammonium nitrate from the eluant after passage through said columns; and

recycling aqueous methanol so recovered from formation of further said eluant solution.

8. The process for separation of gadolinium isotopes as defined in claim 7 wherein said mixture comprises $Gd^{155}$, $Gd^{156}$, $Gd^{157}$ and other gadolinium isotopes.

9. The process for separation of gadolinium isotopes as defined in claim 7 wherein said mixture comprises said gadolinium isotopes and other rare earth elements.

10. The process for separation of gadolinium isotopes as defined in claim 1 wherein said eluant solution contains aqueous methanol containing about 80 volume percent methanol.

11. The process for separation of gadolinium isotopes as defined in claim 7 wherein said plurality of columns comprises 5—40 columns, and each column has a length of about thirteen meters.

12. The process for separation of gadolinium isotopes as defined in claim 7 wherein at least one of said gadolinium isotopes $Gd^{155}$, $Gd^{156}$ and $Gd^{157}$ is separated from the others of said fraction after passage through said columns.

13. The process for separation of gadolinium isotopes as defined in claim 7 wherein said feed solution is in an amount sufficient to form a band in said column of a length of about 0.1 percent to the length of the column and the flow rate of said additional eluant solution is between 0.0775—0.31 ml/cm² (0.5—2.0 ml/in²) of resin column/minute.

14. The process for separation of gadolinium isotopes as defined in claim 7 wherein, prior to completion passage of said fraction through said columns, a further charging of feed solution to said columns is effected, and further eluant solution passed through said columns to form a second said fraction therein.

15. The process for separation of gadolinium isotopes as defined in claim 7 wherein said eluant solution and said feed solution have a concentration of nitrates of a value of about 1.5 N.

16. The process for separation of gadolinium isotopes as defined in claim 7 wherein said additional eluant solution is passed through said plurality of columns at a temperature of between about 40—70°C.

## Patentansprüche

1. Prozeß zur Trennung von Gadoliniumisotopen, ausgewählt aus der Gruppe, die aus $Gd^{155}$, $Gd^{156}$ oder $Gd^{157}$, allein oder miteinander gemischt, besteht, von einer Mischung von Gadoliniumisotopen, die dieselben enthält, wobei der Prozeß aus den folgenden Schritten besteht:

Hindurchleiten einer Lösung, die die genannte Mischung von Gadoliniumisotopen und eine Elutionslösung enthält, durch eine Vielzahl von Säulen, die ein Ionenaustauscherharz enthalten;

Trennen eines Lösungsbandes, angereichert an dem Gadoliniumisotop, das aus der aus $Gd^{155}$, $Gd^{156}$ oder $Gd^{157}$, allein oder gemischt miteinander, bestehenden Gruppe ausgewählt ist, von Bändern, die angereichert sind an den anderen natürlich auftretenden Gadoliniumisotopen, während die die Gadoliniumisotope enthaltende Lösung aus der letzten der Vielzahl von Säulen austritt.

2. Prozeß nach Anspruch 1, wobei die Ionenaustauscherharze ausgewählt sind aus der Gruppe, die aus Anionen- und Kationenaustauscherharzen besteht.

3. Prozeß nach Anspruch 1, weiter umfassend den Schritt des Bildens von Gadolinium aus dem mit dem Gadoliniumisotop angereicherten Lösungsband.

4. Prozeß nach Anspruch 2, wobei die Kationenaustauscherharze im wesentlichen aus einem starken Säureharz bestehen.

5. Prozeß nach Anspruch 1, wobei das Ionenaustauscherharz im wesentlichen aus einem Kationenaustauscherharz besteht, wobei die Elutionslösung eine organische Verbindung enthält, die ausgewählt ist aus der aus EDTA, AcAc und BzAc bestehenden Gruppe.

6. Der Prozeß nach Anspruch 5, wobei die organische Verbindung EDTA ist.

7. Prozeß zur Trennung von Gadoliniumisotopen wie in Anspruch 1 definiert, bestehend aus den folgenden Schritten:

Liefern einer Elutionslösung, bestehend im wesentlichen aus wässrigem Methanol, enthaltend 70 bis 85 Volumen-% Methanol, und mit einer Konzentration von Ammoniumnitrate eines Wertes von 1,0 bis 2,0 N;

Sättigen der Vielzahl von Säulen eines basischen Anionenaustauscherharzes mit der Elutionslösung;

Bilden einer gadoliniumgesättigten Zufuhrlösung;

Laden der Zufuhrlösung in die Vielzahl von gesättigten Säulen;

Hindurchleiten von zusätzlicher Elutionslösung durch die Vielzahl von Säulen, welche die Zufuhrlösung enthält, um so eine Fraktion von Elutionslösung zu bilden, die reich ist an den Gadoliniumisotopen $Gd^{155}$, $Gd^{156}$ und $Gd^{157}$;

Trennen der Fraktion von dem Rest der Elutionslösung nach dem Hindurchführen durch die Säulen;

Wiedergewinnen des wässrigen Methanols und Ammoniumnitrats von der Elutionslösung nach dem Hindurchleiten durch die Säulen; und Zurückführen von wässrigem Methanol, das so wiedergewonnen wurde von der Bildung von weiterer derartiger Elutionslösung.

8. Prozeß zur Trennung von Gadoliniumisotopen wie in Anspruch 7 definiert, wobei die Mischung $Gd^{155}$, $Gd^{156}$, $Gd^{157}$ und andere Gadoliniumisotope umfaßt.

9. Prozeß zur Trennung von Gadoliniumisotopen wie in Anspruch 7 definiert, wobei die Mischung die Gadoliniumisotope und andere seltene Erdelemente umfaßt.

10. Prozeß zur Trennung von Gadoliniumisotopen wie in Anspruch 7 definiert, wobei die Elutionslösung wässriges Methanol enthält, welches etwa 80 Volumen-% Methanol enthält.

11. Prozeß zur Trennung von Gadoliniumisotopen wie definiert in Anspruch 7, wobei die Vielzahl von Säulen 5 bis 40 Säulen umfaßt, und jede Säule eine Länge von etwa 13 Metern aufweist.

12. Prozeß zur Trennung von Gadoliniumisotopen wie in Anspruch 7 definiert, wobei zumindest eines der Gadoliniumisotope $Gd^{155}$, $Gd^{156}$ und $Gd^{157}$ getrennt wird von den anderen der Fraktion nach dem Hindurchleiten durch die Säulen.

13. Prozeß zur Trennung von Gadoliniumisotopen wie in Anspruch 7 definiert, wobei die Zufuhrlösung in eine Menge vorhanden ist, die ausreicht, um ein Band in der Säule mit einer Länge von 0,1% der Länge der Säule zu bilden, und die Durchflußrate der zusätzlichen Elutionslösung zwischen 0,0775 und 0,31 ml/cm² (0,5 bis 2,0 ml/Zoll²) von Harzsäule/Minute beträgt.

14. Prozeß zur Trennung von Gadoliniumisotopen wie in Anspruch 7 definiert, wobei vor der Vollendung des Hindurchleitens der Fraktion durch die Säulen ein weiteres Laden von Zufuhrlösung zu den Säulen durchgeführt wird, und weitere Elutionslösung durch die Säulen hindurchgeleitet wird, um eine zweite derartige Fraktion darin zu bilden.

15. Prozeß zur Trennung von Gadoliniumisotopen wie in Anspruch 7 definiert, wobei die Elutionslösung und die Zufuhrlösung eine Konzentration von Nitraten in einem Wert von etwa 1,5 N besitzen.

16. Prozeß zur Trennung von Gadoliniumisotopen wie in Anspruch 7 definiert, wobei die zusätzliche Elutionslösung durch die Vielzahl von Säulen hindurchgeführt wird bei einer Temperatur zwischen etwa 40 bis 70°C.

## Revendications

1. Procédé de séparation d'isotopes du gadolinium choisis parmi le groupe composé de $Gd^{155}$, $Gd^{156}$, ou $Gd^{157}$ seuls ou mélangés les uns aux autres, d'avec un mélange d'isotopes du gadolinium les contenant, ce procédé comprenant les stades de:

passage d'une solution contenant ce mélange d'isotopes du gadolinium et d'une solution éluante dans une pluralité de colonnes contenant une résine échangeuse d'ions;

lorsque cette solution contenant ces isotopes du gadolinium sort de la dernière de la pluralité de colonnes, séparation d'une bande de solution enrichie en cet isotope du gadolinium choisi parmi le groupe composé de Gd$^{155}$, Gd$^{156}$ ou Gd$^{157}$, seuls ou mélangés les uns aux autres, d'avec les bandes enrichies en autres isotopes du gadolinium existant à l'état naturel.

2. Procédé suivant la revendication 1, dans lequel ces résines échangeuses d'ions sont choisies parmi le groupe composé de résines échangeuses d'anions et de cations.

3. Procédé suivant la revendication 1, comprenant en outre le stade de formation de gadolinium à partir de cette bande de solution enrichie en cet isotope de gadolinium.

4. Procédé suivant la revendication 2, dans lequel ces résines échangeuses de cations se composant essentiellement d'une résine d'acide fort.

5. Procédé suivant la revendication 1, dans lequel cette résine échangeuse d'ions se compose essentiellement d'une résine échangeuse de cations; dans lequel cette solution éluante contient un composé organique choisi parmi le groupe formé de AEDT, AcAc et BzAc.

6. Procédé suivant la revendication 5, dans lequel ce composé organique est AEDT.

7. Procédé de séparation d'isotopes du gadolinium suivant la revendication 1, comprenant les stades de;

préparation d'une solution éluante se composant essentiellement de méthanol aqueux, contenant de 70 à 85 pourcents de méthanol en volume et ayant une concentration en nitrate d'ammonium d'une value de 1 à 2 N;

saturation d'une pluralité de colonnes d'une résine basique échangeuse d'anions par la solution éluante;

formation d'une solution d'alimentation saturée en gadolinium;

chargement de cette solution dans la pluralité de colonnes saturées;

passage d'un supplément de solution éluante dans cette pluralité de colonnes contenant la solution d'alimentation de manière à former une fraction de solution éluante riche en ces isotopes du gadolinium Gd$^{155}$, Gd$^{156}$ et Gd$^{157}$;

séparation de cette fraction d'avec le reste de la solution éluante après passage dans les colonnes; et

recyclage du méthanol aqueux ainsi récupéré pour former un supplément de solution éluante.

8. Procédé de séparation d'isotopes du gadolinium suivant la revendication 7, dans lequel ce mélange comprend Gd$^{155}$, Gd$^{156}$, Gd$^{157}$ et d'autres isotopes du gadolinium.

9. Procédé de séparation d'isotopes du gadolinium suivant la revendication 7, dans lequel ce mélange comprend ces isotopes du gadolinium et d'autres éléments des terres rares.

10. Procédé de séparation d'isotopes du gadolinium suivant la revendication 1, dans lequel cette solution éluante contient du méthanol aqueux comprenant environ 80 pourcents en volume de méthanol.

11. Procédé de séparation d'isotopes du gadolinium suivant la revendication 7, dans lequel cette pluralité de colonnes comprend 5 à 40 colonnes, et chaque colonne a une longueur d'environ treize mètres.

12. Procédé de séparation d'isotopes du gadolinium suivant la revendication 7, dans lequel au moins un de ces isotopes du gadolinium Gd$^{155}$, Gd$^{156}$ et Gd$^{157}$ est séparé des autres isotopes de cette fraction après passage dans les colonnes.

13. Procédé de separation d'isotopes du gadolinium suivant la revendication 7, dans lequel la solution d'alimentation est en quantité suffisante pour former dans le colonne une bande dont la longueur est égale à environ 0,1 pourcent de la longueur de la colonne et le débit du supplément de solution éluante est compris entre 0,0775 et 0,31 ml/cm$^2$ (0,5 à 2 ml/pouce$^2$) de colonne de résine/minute.

14. Procédé de séparation d'isotopes du gadolinium suivant la revendication 7, dans lequel, avant que le passage de la fraction dans les colonnes ne soit terminé, un chargement supplémentaire de solution d'alimentation est effectué dans les colonnes, et un supplément de solution éluante est injecté dans les colonnes pour y former une deuxième fraction.

15. Procédé de séparation d'isotopes du gadolinium suivant la revendication 7, dans lequel cette solution éluante et cette solution d'alimentation ont une concentration en nitrates d'une valeur d'environ 1,5 N.

16. Procédé de séparation d'isotopes du gadolinium suivant la revendication 7, dans lequel ce supplément de solution éluante est injecté dans la pluralité de colonnes à une température comprise entre 40 et 70°C.

**FIG. I**

FIG. 2

EP 0 173 484 B1

2